# EUROPEAN PATENT SPECIFICATION

(11) **EP 1 782 641 B1**
(45) Date of publication and mention of the grant of the patent: **11.05.2011**
(21) Application number: 05771908.0
(22) Date of filing: 15.08.2005
(51) Int. Cl.: H04W 4/14, H04W 88/18, H04W 4/18

(54) **TELECOMMUNICATIONS SERVICES APPARATUS (SMS ROUTER) AND METHOD FOR DELIVERING SHORT MESSAGES (SMS) VIA THE HOME NETWORK OF THE RECIPIENT**
TELEKOMMUNIKATIONSDIENSTEVORRICHTUNG (SMS-ROUTER) UND VERFAHREN ZUM ZUSTELLEN VON KURZNACHRICHTEN (SMS) ÜBER DAS HEIMNETZWERK DES EMPFÄNGERS
APPAREIL DE SERVICES DE TELECOMMUNICATIONS ET PROCEDE POUR DISTRIBUER DES MESSAGES COURTS PAR L'INTERMEDIAIRE DU RESEAU DOMESTIQUE DU RECIPIENT

(30) Priority: 13.08.2004 GB 0418119
(43) Date of publication of application: 09.05.2007
(73) Proprietor: Solent Text Limited, Segensworth East Fareham Hampshire PO15 5TT (GB)
(72) Inventor: WILSON, Jeffrey, Hampshire PO16 70H (GB); MOORE, Graham, Southampton, Hampshire SO31 6TX (GB)
(74) Representative: Lewis, Darren John
(86) International application number: PCT/GB2005/003204
(87) International publication number: WO 2006/016189

(56) References cited:
- EP-A- 1 408 705
- WO-A-98/32300
- WO-A-03/049461

## Description

This invention relates to a telecommunications services apparatus and a method for use with a mobile telecommunications system, such as a mobile telephone system. In particular, the invention relates to improved architectures for message handling.

The invention is described in the context of GSM networks, but has applicability to other mobile network types. The term text messaging where used in this document is taken to mean any form of text messaging including but not limited to SMS, EMS, MMS and the like.

In traditional GSM networks, the Short Message Services (SMS) provide a facility for the transfer of a Short Message between an originating Mobile Station (MS) and a Short Message Service Centre (SMSC), and between the SMSC and a receiving MS. Messaging between a network Host or Application and an MS is also supported. The SMSC is a store and forward device, conceived to overcome the limitations of early GSM deployments where network coverage and MS battery life were not as good as they are today. In modem networks, the requirement for storage is very much reduced, with typically 80%+ of messages being directly deliverable on the first attempt. Indeed some new GSM networks are being deployed with no SMSCs at all.

The GSM Specifications (now under the ownership of the 3^{rd} Generation Partnership Project, 3GPP) define a messaging architecture where the Message Centre that provides message storage resides in the home network of the message sender. This means that the delivery process, including all aspects of retry schedules and validity period, are all under the sole control of the sending network. The recipient therefore has generally no means of controlling this, since messages may come from any network anywhere in the world. If the recipient is temporarily unavailable, then multiple messages may be stored in many different networks, waiting for a future opportunity to deliver. If the recipient were to decide that he would like all of these messages delivered for example by email, then the architecture does not permit this, because the messages are under the control of other networks.

This is in contrast to other forms of communication such as Voice mail. Voice mail messages are always stored in a mailbox in the user's home network. Similarly with multimedia messaging (MMS); the message is passed to a Multimedia Message Service Centre (MMSC) in the recipients home network before delivery and stored there if necessary. Likewise email is stored on a server at one's own ISP, and can be retrieved on demand from any Internet terminal.

It can be seen therefore that the traditional architecture of SMS is anomalous, and that the principle of storing messages in the sender's network until they can be delivered by SMS places severe restrictions on the ways in which the intended recipient can handle the message.

Furthermore with the present architecture, if the recipient is roaming, then messages sent from other networks will not pass through the home network at all. Desirable services such as Divert, Copy, Log, and email archive are not therefore possible with the traditional architecture.

It is known that a malicious network or service provider with SS7 access can send faked Mobile Terminated messages to any subscriber on any network. These messages can contain Over The Air (OTA) updates which can for example change the SIM settings of the recipient to cause subsequent WAP connections to dial a premium rate number. Such malicious activity cannot be trapped by operators, even for premium customers, using a traditional architecture where the Mobile Terminated message may not even pass through the victim's home network.

WO 03/049461 discloses a mobile telephone system in which a call routing equipment such as an SMS Router receives a routing information request signal (SRI_SM) indicative of a communication such as a text message intended for a mobile terminal, and returns a falsified routing information response signal indicative of the SMS Router instead of being indicative of the intended mobile terminal. This allows processing of the resulting text message by the SMS Router, such as archiving of the text message, sending the text message to an email address, and/or forwarding the text message to an alternative destination.

WO 98/32300 discloses a method and system for routing of messages in a radiocommunication system. Messages which originate at a mobile unit are routed through both a service center associated with the originating mobile and a service center associated with a recipient mobile. If the recipient has subscribed to an enhanced message routing service, then the home location register returns an address of the recipient's service center in response to a request for routing information. When the home location register is queried again for routing information for the same message, the enhanced message service indicator is suppressed so that the home location register returns a routing number for the equipment which is currently supporting radiocommunication with the recipient, rather than returning the service center address a second time.

EP 1 408 705 discloses a method of controlling delivery of text messages to a subscriber in a telecommunications services apparatus, the method comprising the steps of the subscriber making a selection as to the mode or modes of delivery that the subscriber requires for at least one future text message, or category of future text messages, the subscriber's requested selection being implemented by a message processing means which is part of the home network with which the subscriber's mobile telephone is normally associated, the arrangement being such that any text messages intended by the sender to be delivered to the said subscriber, as intended receiver thereof, are directed to the message processing means which then implements the delivery mode previously selected by the subscriber.

According to the first aspect of the invention there is provided telecommunications services apparatus according to claim 1 of the appended claims.

According to a second aspect of the invention there is provided a telecommunications services method according to claim 14 of the appended claims.

Other aspects of the invention include a computer program according to claim 27 having computer executable instructions, which when loaded on to a computer is operable to cause the computer to perform the above method, and a computer program product according to claim 28 comprising a computer readable medium having recorded thereon information signals representative of the computer program.

According to an example of the invention there is provided a telecommunications services apparatus for use with a mobile telecommunications network, operable to receive and store mobile terminated text messages addressed to subscribers of the telecommunications network, and further operable to deliver messages from the store to the required recipients.

The originally intended recipient may wish to copy, divert or otherwise modify messages, and the term "required recipient" is to include these possibilities.

Also, messages may be intelligently modified either when routed or stored in the home network, and the term "messages" is to include these options

Preferably, the apparatus is operable to process a stored message for the purpose of controlling its destination, its means of delivery, or its routing.

Preferably, the apparatus is operable to process a stored message for the purpose of implementing an application.

Preferably, the apparatus is operable to process a stored message for the purpose of permitting access to the message from another medium, such as a fixed line network, a data network or by text to speech.

Preferably, the apparatus is operable to process a stored message for the purpose of allowing on-demand or polled delivery or re-delivery, even if the message has been diverted or otherwise processed.

Preferably, the apparatus is operable to process stored messages for the purpose of controlling the delivery order, particularly in respect of messages that are segments of a concatenated message.

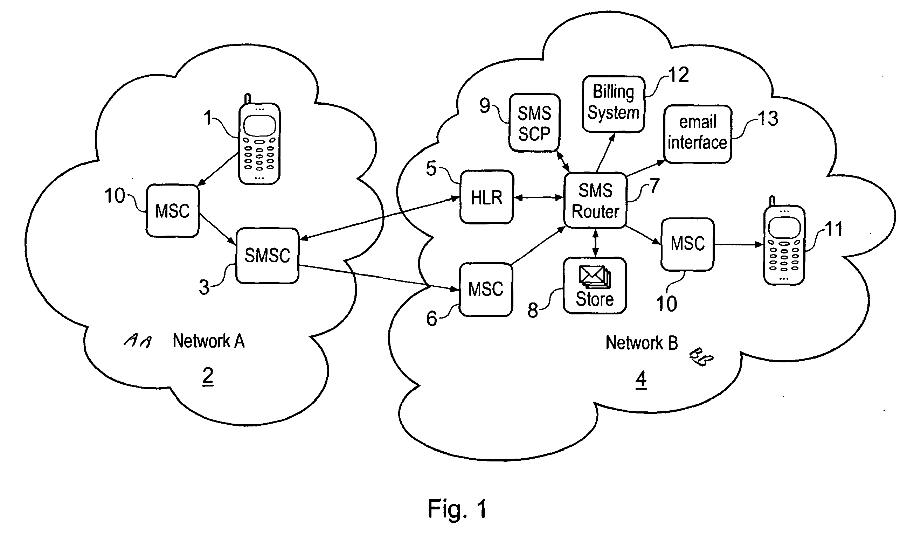

The invention will now be described by way of example with reference to the accompanying drawing (Figure 1) which shows telecommunications equipment according to an embodiment of the invention.

Referring to Figure 1, there is shown a subscriber (1) of Network A (2) sending a message via a mobile switching centre MSC (10) and a short message service centre SMSC (3) in Network A, to a subscriber (11) in Network B (4). The delivery requires the query of a home location register HLR (5) in Network B, and the message is then delivered via a gateway MSC (6) in network B and then to an SMS Router (7). The Router (7) copies the message into an associated store (8). Optionally a central controller, such as an SMS service control point SCP (9) may be used to provide additional intelligence for message routing or service implementation. Normally the message would then be delivered via the MSC (10) to the recipient (11). A billing system (12) may be involved if for example the recipient is Pre-pay and roaming. Alternative or additional delivery means are exemplified by an email interface (13).

The SMS Router (7) may be, for example, a Telsis (RTM) SMS Router, manufactured by Telsis Limited.

A key aspect of the present technique is the adoption of an additional message store (8) in the Recipient's Network for Mobile Terminated (MT) messages, as distinct from the traditional architecture where the stores are only in the senders' networks. This will be referred to as a Recipient Network MT Store, or RN-MT Store. There are many advantages to be obtained by adopting the principle of an RN-MT Store, that is an additional store in the recipient's network. It should also be understood that implementation of an RN-MT Store in no way contradicts or undermines the GSM system, and does not require decommissioning of any existing stores, but actually enhances GSM significantly, and provides a foundation for the implementation of a wide range of services that are not possible with traditional architectures. The adoption of an RN-MT Store is therefore seen as a significant evolution for SMS, and other messaging systems that do not already employ this technique. The RN-MT Store can also assist in the eventual evolution to an architecture where the requirement for stores in the sender's network is significantly reduced or even removed altogether.

The advantages of an RN-MT Store approach are now described.

In traditional SMS architectures, the SMSC (3) in the sender's network delivers the Short Message directly to the MSC/VLR where the recipient is currently attached. Consequently, if the recipients is roaming, the Short Message does not pass through the recipient's home network at all. This has been a significant barrier to the development of any services, particularly business services, aimed at enhancing the capabilities of a message recipient (e.g. Divert, Copy, Log, Archive).

With the RN-MT Store approach, some or all messages, or those messages associated with particular subscribers, can be forced to pass through the home network before delivery. This means that any desired value-added services can then be applied to the messages.

In traditional SMS architectures, any foreign SMSC is permitted to perform an SRI_SM (Send routing information for Short Message) request, and can receive in response the IMSI and the VLR location where the subscriber is currently attached. For many customers this is an undesirable invasion of privacy; and for certain classes of premium customer may be unacceptable. The RN-MT Store solution, selectively for some or all customers, returns the address of the RN-MT Store instead of the subscriber's location. The true location is never released outside the home network. Hence the solution provides location privacy.

The solution also provides absence privacy. Because the subscriber_{'}s store is always available, the message will always be delivered. Delivery receipts will be sent immediately indicating successful delivery. The sender is not able to use a delivery receipt to determine for example when the recipient gets off a plane and switches his phone on. The RN-MT Store will deliver the message promptly to a user by the methods he chooses, over media and at times that are under the recipient's control.

Voice systems and also mobile telephone systems have supported a range of conditional and unconditional divert (or forwarding) functions. However divert functionality is absent from text systems, not out of choice, but because the traditional architecture does not permit it. Adoption of the RN-MT Store approach allows some or all MT messages to be always directed via the home network, thereby closing the loophole that has previously prevented a full solution. Mobile originated MO messages do not have this problem, since these always pass through the home network, and can easily be processed by SMS Routers in the MO path.

The use of SMS Routers in the MO and MT paths in conjunction with an RN-MT Store in the MT path provide a full solution for Divert and many other desirable value added services.

Copying received messages to a second phone, logging sent and received messages, and archiving messages to an email account for ease of management are all functions that can be adopted once an RN-MT store based architecture is used. The use of a store in the MT path allows the recipient to manage his messages even after delivery. For example, messages can be delivered immediately to one or more handsets, left in the store for a defined period to allow for re-delivery requests, and then archived to email before being deleted from the store.

Anti-Spam has always been a difficult topic to address, not least because one man's Spam is another man's marketing message, so no blanket solution can satisfy all customers. However with an RN-MT Store approach, Spam filtering can be applied to messages in the store according to a provisioned class of service, preferably held in the HLR. Thus those recipients who want Spam filtering can select this feature and configure the level of protection required, while others may prefer to see all messages. Filtered messages may be sent to an email account for example rather than being delivered to a handset.

As discussed above, a malicious service provider has previously been able to send faked MT messages to any subscriber, these messages possibly containing OTA updates causing the recipient to make premium calls unknowingly when accessing WAP or GPRS content. The present technique can avoid this problem. However, this does not prevent the operator from sending genuine OTA messages, bypassing the Spam filter, for example by using an alternative interface such as an IP interface to the apparatus.

There is one area in which adoption of an RN-MT Store slightly alters the user experience from the point of view of the sender. This is in the area of delivery receipts. In most cases the sender of a message does not request a delivery receipt (sometimes called a delivery report) in which case there will be no change to system behaviour whatsoever as observed by the sender. However, if the sender does request a delivery receipt (the method of request being network dependent) then the sender would previously have received a successful delivery notification when the message reached the handset of the recipient. With an RN-MT Store system, the recipient has now devolved responsibility for message collection to the RN-MT Store. Consequently, the sender will receive a positive delivery notification once the message reaches the recipient's store. If the recipient is reachable as will be the case in 80% of transmissions, then delivery to the handset will occur almost simultaneously, and so altered behaviour of the receipt only applies to the remaining 20% of messages approximately where direct delivery is not possible.

At first sight this may appear to be a disadvantage, but there is an equally compelling benefit. The SMS delivery receipt in its current form rides roughshod over any desire for privacy on the part of the recipient. With email systems, the sender of a message may request a delivery notification, but the recipient has the final say and may accept or decline the request to send a receipt. However withe SMS, the request for a receipt is invisible to the recipient, and the receipt is provided to the sender regardless of the recipient's wishes for privacy. It is easy for a sender to use delivery receipts to determine when a person switches his phone on in the morning, or when he gets off a plane, or to determine that the phone is available to answer a call.

Furthermore it must be appreciated that the traditional behaviour of a delivery receipt only indicates that the message has reached a handset, and not that it has reached a person. With email, the receipt indicates that the message has been opened, and therefore indicates the presence of a person. Therefore the change in SMS receipt behaviour caused by a move to an RN-MT Store is not as great as might be imagined. The receipt now indicates successful delivery to the recipient's authorised agent (i.e. the store) instead of to a handset, but the store can have many more ways of contracting the user.

A preferred mode of operation of the present invention is now described.

Two types of message need to be considered: those that are mobile originated (MO), i.e. sent by a subscriber and those that are mobile terminated (MT), i.e. received by a subscriber. In the mobile originated case, it is known that all messages sent by a subscriber will be delivered to the Short Message Service Centre (SMSC) address in his home network. It is also known that Signalling Transfer Points (STPs) or Global Title Translators (GTTs) can be programmed to route all mobile originated messages sent to this address through an equipment for processing prior to being delivered, either directly to the destination or to the SMSC.

As mentioned above, a suitable equipment for implementing the message processing is a Telsis SMS Router.

The global GSM system consists of a number of GSM networks. The network on which a subscriber is registered is known as his "home" network. When a subscriber sends a text message, the message is always delivered in the first instance to an equipment in his home network, typically an SMS Router or a Message Centre (SMSC). Delivery to an SMS Router is normally achieved by arranging for the SMS Routers in the MO path of the network to take on the Global Title of the SMSCs, thereby receiving all of the MO messages addressed to an SMSC. This is the case even when the subscriber is roaming on another network. The SMS Router then queries the Home Location Register (HLR) of the destination subscriber's network and the message is then forwarded accordingly.

The global address of a Message Centre is normally programmed into the subscriber's handset. This global address is interpreted by STPs or GTTs in the GSM network in order to deliver the message to the appropriate equipment.

The mobile terminating case is more difficult because there is no guarantee that in normal circumstances messages delivered to a subscriber's handset will pass through the subscriber's home network at all. It is known that in order to deliver a message to a subscriber, a query must be made to the HLR of the subscriber's home network in order to determine the current location of the subscriber. In the case of short messages this query is known as "send routing information for short message" or SRI_SM. It is also known that STPs or GTTs can be programmed to route signalling messages to an alternative destination. In some cases it is possible to selectively route SRI_SM messages (and the SRI equivalent messages to voice calls) without affecting other types of messages. The present technique may make use of such routing to send SRI_SM messages to the SMS Router (7).

Alternatively and in the preferred embodiment, the HLR (5) can be programmed to forward some or all SRI_SMs to the SMS Router (7), excluding those arriving from another SMS Router. The messages so routed may depend on the Class of service for the recipient, which is preferably stored as a field in the HLR (5). The SMS Router (7) is then able to reply to these queries on behalf of the HLR (5), while also itself querying the HLR (5) to determine the true location of the recipient. However instead of returning the true location of the subscriber the SMS Router (7) can return its own location in the response to the SRI_SM. The effect of this is that the short message will be delivered not to the subscriber but to the SMS Router (7). This is true regardless of the current locations of either the sender or the recipient. The SMS Router (7) is then able to implement any desired processing on the text message, for example archiving to email, before finally optionally forwarding the message onto the actual location of the subscriber as indicated by the HLR (5).

According to the present technique, the SMS Router (7) can communicate with the RN-MT Store (8), and preferably all messages received by the SMS Router (7) are placed into the RN-MT Store (8) before the first delivery attempt. Once in the store, the SMS Router (7), preferably but not necessarily in conjunction with centralised intelligence provided by the SMS SCP (9), can decide what processing to perform on the message. This may typically include implementing optional diverts, copies, anti-spam filtering etc. Preferably once processing is complete, the message may be delivered accordingly. Delivery routes may include SMS, email, text to speech or other methods.

The RN-MT Store (8) acts like a first-in first-out (FIFO) buffer in respect of the messages for any one recipient. This ensures that the delivery order is preserved. The RN_MT Store (8) preferably behaves as a single network store, accessible from any SMS Router. This may be achieved in a variety of ways, such as implementing a single physical store, by using central intelligence to arrange for multiple physical stores to appear as one store, or by other means. Data may also be stored in multiple stores for redundancy.

The adoption of the RN-MT Store (8) aligns SMS with several other forms of messaging, and opens the possibility of a unified messaging mailbox, where recipients can manage and receive multiple forms of messaging including SMS in a single inbox. It is not possible with traditional SMS architectures to include SMS in such a scheme.

Registration and activation of value added services involving the SMS Router (7) and the RN-MT Store (8) are preferably achieved using USSD, SMS, Interactive Voice services, WAP or the web, and arranging for the equipment(s) handling these interfaces to pass suitable configuration messages to the SMS Router (7) or SMS SCP (9). USSD is preferably used between the SMS Router (7) and the HLR (5) for services where HLR storage of a setting is required. Other methods are possible.

In so far as the embodiment(s) of the invention described above may be implemented, at least in part, using software controlled processing apparatus, it will be appreciated that a computer program providing such software control and a storage medium by which such a computer program is stored are envisaged as aspects of the invention.

## Claims

1. Telecommunications services apparatus for use with a mobile telecommunications network (4), the apparatus comprising means (7) for receiving a mobile terminated SMS text message addressed to a subscriber (11) of the mobile telecommunications network as required recipient, means for storing the received mobile terminated SMS text message, and means (7) for delivering the mobile terminated SMS text message from the storing means to the required recipient (11), wherein the storing means comprises a mobile terminated SMS text message store (8), and wherein the mobile terminated SMS text message remains in the mobile terminated SMS text message store after delivery to the required recipient (11), wherein the apparatus is operable to receive the mobile terminated SMS text message by receiving a send routing information for short message signal for the mobile terminated SMS text message and replying with its own location instead of the location of the required recipient (11).

2. Apparatus according to claim 1, comprising means for processing a stored mobile terminated SMS text message for the purpose of controlling its destination, its means of delivery, or its routing.

3. Apparatus according to claim 1, comprising means for processing a stored mobile terminated SMS text message for the purpose of implementing an application.

4. Apparatus according to claim 1, comprising means for processing a stored mobile terminated SMS text message for the purpose of permitting access to the message from another medium.

5. Apparatus according to claim 4, wherein the other medium is a fixed line network, a data network or by text-to-speech.

6. Apparatus according to claim 1, comprising means for processing a stored mobile terminated SMS text message for the purpose of allowing on-demand or polled delivery or re-delivery.

7. Apparatus according to claim 1, comprising means for processing stored mobile terminated SMS text messages for the purpose of controlling the delivery order.

8. Apparatus according to claim 7, wherein the processing means is operable to control the delivery order of segments of a concatenated message.

9. Apparatus according to any one of claims 1 to 8, wherein the "send routing information for short message" signal is received from a signalling transfer point or a global title translator.

10. Apparatus according to any one of claims 1 to 8, wherein the "send routing information for short message" signal is received from a home location register.

11. Apparatus according to any one of claims 1 to 10, wherein the receiving means is operable to reply to the "send routing information for short message" signal on behalf of a home location register of the mobile telecommunications network.

12. Apparatus according to any one of claims 1 to 11, wherein the receiving means and/or the storing means are operable in conjunction with centralised intelligence.

13. Apparatus according to any one of claims 1 to 12, wherein the receiving means is operable to return a delivery receipt in respect of the received mobile terminated SMS text message.

14. A telecommunications services method in a mobile telecommunications network (4), the method comprising receiving a mobile terminated SMS text message addressed to a subscriber (11) of the mobile telecommunications network as required recipient in a telecommunications services apparatus of the mobile telecommunications network, storing the received mobile terminated SMS text message in a storing means, and delivering the stored mobile terminated SMS text message to the required recipient (11), wherein the storing means comprises a mobile terminated SMS text message store (8), and wherein the mobile terminated SMS text message remains in the mobile terminated SMS text message store after delivery to the required recipient (11), wherein receiving the mobile terminated SMS text message in the telecommunications services apparatus comprises receiving a send routing information for short message signal for the mobile terminated SMS text message in the telecommunications services apparatus and replying with the location of the telecommunications services apparatus instead of the location of the required recipient (11).

15. A method according to claim 14, including processing a stored mobile terminated SMS text message for the purpose of controlling its destination, its means of delivery, or its routing.

16. A method according to claim 14, including processing a stored mobile terminated SMS text message for the purpose of implementing an application.

17. A method according to claim 14, including processing a stored mobile terminated SMS text message for the purpose of permitting access to the message from another medium.

18. A method according to claim 17, wherein the other medium is a fixed line network, a data network or by text-to-speech.

19. A method according to claim 14, including processing a stored mobile terminated SMS text message for the purpose of allowing on-demand or polled delivery or re-delivery.

20. A method according to claim 14, including processing stored mobile terminated SMS text messages for the purpose of controlling the delivery order.

21. A method according to claim 20, wherein the delivery order of segments of a concatenated message is controlled.

22. A method according to any one of claims 14 to 21, wherein the "send routing information for short message" signal is received from a signalling transfer point or a global title translator.

23. A method according to any one of claims 14 to 21, wherein the "send routing information for short message" signal is received from a home location register.

24. A method according to any one of claims 14 to 23, wherein a reply is sent to the "send routing information for short message" signal on behalf of a home location register of the mobile telecommunications network.

25. A method according to any one of claims 14 to 24, wherein operations are conducted in conjunction with centralised intelligence.

26. A method according to any one of claims 14 to 25, wherein a delivery receipt is returned in respect of the received mobile terminated SMS text message.

27. A computer program having computer executable instructions, which when loaded on to a computer is operable to cause the computer to perform the method according to any one of claims 14 to 26.

28. A computer program product having a computer readable medium having recorded thereon information signals representative of the computer program according to claim 27.

## Patentansprüche

1. Telekommunikationsdienstevorrichtung für die Verwendung mit einem mobilen Telekommunikationsnetzwerk (4), wobei die Vorrichtung aufweist Mittel (7) für das Empfangen einer mobile-terminated-SMS-Textnachricht (SMS-Textnachricht, bei dem das Zielendgerät ein Mobiltelefon ist), die an einen Teilnehmer (11) des mobilen Telekommunikationsnetzwerkes als gewünschten Empfänger gerichtet ist, Mittel für das Speichern der empfangenen mobile terminated SMS-Textnachricht, und Mittel (7) für das Ausliefern der mobile-terminated-SMS-Textnachricht von den Speichermitteln an den gewünschten Empfänger (11), wobei die Speichermittel einen mobile-terminated-SMS-Textnachricht-Speicher (8) aufweist, und wobei die mobile-terminated-SMS-Textnachricht in dem mobile-terminated-Textnachrichtspeicher nach der Auslieferung an den gewünschten Empfänger (11) verbleibt, wobei die Vorrichtung betreibbar ist, um die mobile-terminated-SMS-Textnachricht zu empfangen durch das Empfangen einer Sendeleitinformation für ein Kurznachrichtsignal für die mobile-terminated-SMS-Textnachricht und das Antworten mit dem eigenen Ort anstelle des Ortes des gewünschten Empfängers (11).

2. Vorrichtung nach Anspruch 1, die Einrichtungen für das Verarbeiten einer gespeicherten mobile-terminated-SMS-Textnachricht für den Zweck des Steuerns ihres Ziel, ihrer Auslieferungsmittel oder ihres Weiterleitens aufweist.

3. Vorrichtung nach Anspruch 1, die eine Einrichtung für das Verarbeiten einer gespeicherten mobile-terminated-Textnachricht für den Zweck des Implementierens einer Anwendung aufweist.

4. Vorrichtung nach Anspruch 1, die eine Einrichtung für das Verarbeiten einer gespeicherten mobile-terminated-SMS-Textnachricht aufweist für den Zweck des Erlaubens des Zugriffs auf die Nachricht von einem anderen Medium.

5. Vorrichtung nach Anspruch 4, bei der das andere Medium ein Festnetz, ein Datennetzwerk, oder durch Text-Zu-Sprache ist.

6. Vorrichtung nach Anspruch 1, die eine Einrichtung für das Verarbeiten einer gespeicherten mobile-terminated-SMS-Textnachricht für den Zweck des Zulassens einer Auslieferung oder erneuten Auslieferung auf Abruf oder mittels Polling aufweist.

7. Vorrichtung nach Anspruch 1, die eine Einrichtung für das Verarbeiten gespeicherter mobile-terminated-SMS-Textnachrichten für den Zweck des Steuerns der Auslieferungsreihenfolge aufweist.

8. Vorrichtung nach Anspruch 7, bei dem die Verarbeitungseinrichtung betreibbar ist, um die Auslieferungsreihenfolge von Segmenten einer verknüpften Nachricht zu steuern

9. Vorrichtung nach einem der Ansprüche 1 bis 8, bei der das "send routing information for short message"-Signal (Sende-Leit-Information-für-Kurznachricht-Signal) von einem Signalisierungsübertragungspunkt oder einem globalen Titelübersetzer (global title translator) empfangen wird.

10. Vorrichtung nach einem der Ansprüche 1 bis 8, bei der das "send routing information for short message"-Signal von einem Verzeichnis des Heimatortes empfangen wird.

11. Vorrichtung nach einem der Ansprüche 1 bis 10, bei der die Empfangsmittel betreibbar sind, um auf das "send routing information for short message"-Signal im Namen des Verzeichnis des Heimatortes des mobilen Telekommunikationsnetzwerkes zu antworten.

12. Vorrichtung nach einem der Ansprüche 1 bis 11, bei der die Empfangseinrichtung und/oder die Speichereinrichtung in Verbindung mit einer zentralisierten Intelligenz betreibbar sind.

13. Vorrichtung nach einem der Ansprüche 1 bis 12, bei der die Empfangseinrichtung betreibbar ist, um eine Auslieferungsbestätigung im Bezug auf die empfangene mobile-terminated-SMS-Textnachricht zurückzugeben.

14. Telekommunikationsdienstverfahren in einem mobilen Telekommunikationsnetzwerk (4), wobei das Verfahren aufweist das Empfangen einer mobile-terminated-SMS-Textnachricht, die an einen Teilnehmer (11) des mobilen Telekommunikationsnetzwerkes als gewünschter Empfänger adressiert ist in einer Telekommunikatiansdienstevarrichtung des mobilen Telekommunikationsnetzwerkes, das Speichern der empfangenen mobile-terminated-SMS-Textnachricht in einer Speichereinrichtung, und das Ausliefern der gespeicherten mobile-terminated-SMS-Textnachricht an den gewünschten Empfänger (11), wobei die Speichereinrichtung einen mobile-terminated-SMS-Textnachrichtspeicher (8) aufweist, und wobei die mobile-terminated-SMS-Textnachricht in dem mobile-terminated-SMS-Textnachrichtspeicher nach der Auslieferung an den gewünschten Empfänger (11) verbleibt, wobei das Empfangen der mobile-terminated-SMS-Textnachricht in der Telekammunikationsdienstvarrichtung aufweist das Empfangen einer Sende-Leit-Information für das Kurznachrichtsignal für die mobile-terminated-SMS-Textnachricht in der Telekommunikationsdienstevorrichtung und das Antworten mit dem Ort der Telekommunikationsdienstevorrichtung anstelle des Ortes des gewünschten Empfängers (11).

15. Verfahren nach Anspruch 14, das einschließt das Verarbeiten einer gespeicherten mobile-terminated-SMS-Textnachricht für den Zweck des Steuerns deren Ziel, deren Art der Zustellung oder deren Weiterleitung.

16. Verfahren nach Anspruch 14, das das Verarbeiten einer gespeicherten mobile-terminated-SMS-Textnachricht für den Zweck des Implementierens einer Anwendung beinhaltet.

17. Verfahren nach Anspruch 14, das das Verarbeiten einer gespeicherten mobile-terminated-SMS-Textnachricht für den Zweck des Erlaubs des Zugriffs auf die Nachricht von einem anderen Medium beinhaltet.

18. Verfahren nach Anspruch 17, bei dem das andere Medium ein Festnetz, ein Datennetzwerk oder durch Text-zu-Sprache ist.

19. Verfahren nach Anspruch 14, welches die Verarbeitung einer gespeicherten mobile-terminated-SMS-Textnachricht für den Zweck des Erlaubens eines Auslieferns oder erneuten Auslieferns auf Abruf oder durch Polling beinhaltet.

20. Verfahren nach Anspruch 14, das die Verarbeitung der gespeicherten mobile-terminated-SMS-Textnachricht für den Zweck des Steuerns der Auslieferungsordnung beinhaltet.

21. Verfahren nach Anspruch 20, bei dem die Auslieferungsordnung von Segmenten einer verknüpften Nachricht gesteuert wird.

22. Verfahren nach einem der Ansprüche 14 bis 21, bei dem das "send routing information for short message"-Signal von einem Signalübertragungspunkt oder einem globalen Titelübersetzer empfangen wird.

23. Verfahren nach einem der Ansprüche 14 bis 21, bei dem die "send routing information for short message"-Signal von einem Verzeichnis des Heimatortes empfangen wird.

24. Verfahren nach einem der Ansprüche 14 bis 23, bei dem eine Antwort im Namen eines Verzeichnisses des Heimatortes des mobilen Telekommunikationsnetzwerkes auf das "send routing information for short message"-Signal gesendet wird.

25. Verfahren nach einem der Ansprüche 14 bis 24, bei dem Operationen in Verbindung mit zentralisierter Intelligenz durchgeführt werden.

26. Verfahren nach einem der Ansprüche 14 bis 25, bei dem eine Auslieferungsbestätigung im Bezug auf die empfangene mobile-terminated-SMS-Textnachricht zurückgegeben wird.

27. Computerprogramm mit computerausführbaren Befehlen, das, wenn es auf einen Computer geladen wird, betreibbar ist, um zu veranlassen, dass der Computer das Verfahren nach einem der Ansprüche 14 bis 26 durchführt.

28. Computerprogrammprodukt mit einem computerlesbaren Medium und hierauf gespeicherten Informationssignalen, die das Computerprogramm nach Anspruch 27 darstellen.

## Revendications

1. Dispositif de service de télécommunication destiné à être utilisé avec un réseau de télécommunication mobile (4), le dispositif comportant un moyen (7) pour recevoir un message texte SMS aboutissant à un terminal mobile adressé à un abonné (11) du réseau de télécommunication mobile en qualité de destinataire requis, un moyen pour stocker le message texte SMS aboutissant à un terminal mobile reçu, et un moyen (7) pour distribuer le message texte SMS aboutissant à un terminal mobile, du moyen de stockage au destinataire requis (11) ; dans lequel le moyen de stockage comporte un magasin de stockage de messages texte SMS aboutissant à un terminal mobile (8), et dans lequel le message texte SMS aboutissant à un terminal mobile est conservé dans le magasin de stockage de messages texte SMS aboutissant à un terminal mobile à l'issue de la distribution au destinataire requis (11), dans lequel le dispositif est exploitable pour recevoir le message texte SMS aboutissant à un terminal mobile en recevant un signal « envoyer les informations d'acheminement de message court » pour le message texte SMS aboutissant à un terminal mobile et répondre avec sa propre localisation au lieu de la localisation du destinataire requis (11).

2. Dispositif selon la revendication 1, comportant un moyen pour traiter un message texte SMS aboutissant à un terminal mobile stocké, dans le but de commander sa destination, son moyen de distribution, ou son acheminement.

3. Dispositif selon la revendication 1, comportant un moyen pour traiter un message texte SMS aboutissant à un terminal mobile stocké, dans le but de mettre en oeuvre une application.

4. Dispositif selon la revendication 1, comportant un moyen pour traiter un message texte SMS aboutissant à un terminal mobile stocké, dans le but de permettre un accès au message à partir d'un autre support.

5. Dispositif selon la revendication 4, dans lequel l'autre support est un réseau fixe, un réseau de données ou un support utilisant la synthèse de la parole à partir du texte.

6. Dispositif selon la revendication 1, comportant un moyen pour traiter un message texte SMS aboutissant à un terminal mobile stocké, dans le but de permettre une distribution ou redistribution à la demande ou par interrogation préalable.

7. Dispositif selon la revendication 1, comportant un moyen pour traiter des messages texte SMS aboutissant à un terminal mobile stockés dans le but de commander la séquence de distribution.

8. Dispositif selon la revendication 7, dans lequel le moyen de traitement est exploitable pour commander la séquence de distribution de segments d'un message concaténé.

9. Dispositif selon l'une quelconque des revendications 1 à 8, dans lequel le signal « envoyer les informations d'acheminement de message court » est reçu à partir d'un point de transfert de signalisation ou un traducteur de titres universels.

10. Dispositif selon l'une quelconque des revendications 1 à 8, dans lequel le signal « envoyer les informations d'acheminement de message court » est reçu à partir d'un enregistreur de localisation nominal.

11. Dispositif selon l'une quelconque des revendications 1 à 10, dans lequel le moyen de réception est exploitable pour répondre au signal « envoyer les informations d'acheminement de message court » au nom d'un enregistreur de localisation nominal du réseau de télécommunication mobile.

12. Dispositif selon l'une quelconque des revendications 1 à 11, dans lequel le moyen de réception et/ou le moyen de stockage sont exploitables conjointement à une fonction d'intelligence centralisée.

13. Dispositif selon l'une quelconque des revendications 1 à 12, dans lequel le moyen de réception est exploitable pour renvoyer un accusé de réception de distribution relativement au message texte SMS aboutissant à un terminal mobile reçu.

14. Procédé de service de télécommunication dans un réseau de télécommunication mobile (4), le procédé comportant l'étape consistant à recevoir un message texte SMS aboutissant à un terminal mobile, adressé à un abonné (11) du réseau de télécommunication mobile en qualité de destinataire requis dans un dispositif de service de télécommunication du réseau de télécommunication mobile, stocker le message texte SMS aboutissant à un terminal mobile reçu dans un moyen de stockage, et distribuer le message texte SMS aboutissant à un terminal mobile stocké au destinataire requis (11), dans lequel le moyen de stockage comporte un magasin de stockage de messages texte SMS aboutissant à un terminal mobile (8), et dans lequel le message texte SMS aboutissant à un terminal mobile est conservé dans le magasin de stockage de messages texte SMS aboutissant à un terminal mobile à l'issue de la distribution au destinataire requis (11) ; dans lequel l'étape consistant à recevoir le message texte SMS aboutissant à un terminal mobile dans le dispositif de service de télécommunication comporte l'étape consistant à recevoir un signal « envoyer les informations d'acheminement de message court » pour le message texte SMS aboutissant à un terminal mobile dans le dispositif de service de télécommunication et répondre avec la localisation du dispositif de service de télécommunication au lieu de la localisation du destinataire requis (11).

15. Procédé selon la revendication 14, comportant l'étape consistant à traiter un message texte SMS aboutissant à un terminal mobile stocké, dans le but de commander sa destination, son moyen de distribution, ou son acheminement.

16. Procédé selon la revendication 14, comportant l'étape consistant à traiter un message texte SMS aboutissant à un terminal mobile stocké, dans le but de mettre en oeuvre une application.

17. Procédé selon la revendication 14, comportant l'étape consistant à traiter un message texte SMS aboutissant à un terminal mobile stocké, dans le but de permettre un accès au message à partir d'un autre support.

18. Procédé selon la revendication 17, dans lequel l'autre support est un réseau fixe, un réseau de données ou un support utilisant la synthèse de la parole à partir du texte.

19. Procédé selon la revendication 14, comportant l'étape consistant à traiter un message texte SMS aboutissant à un terminal mobile stocké, dans le but de permettre une distribution ou redistribution à la demande ou par interrogation préalable.

20. Procédé selon la revendication 14, comportant l'étape consistant à traiter des messages texte SMS aboutissant à un terminal mobile stockés dans le but de commander la séquence de distribution.

21. Procédé selon la revendication 20, dans lequel la séquence de distribution de segments d'un message concaténé est commandée.

22. Procédé selon l'une quelconque des revendications 14 à 21, dans lequel le signal « envoyer les informations d'acheminement de message court » est reçu à partir d'un point de transfert de signalisation ou un traducteur de titres universels.

23. Procédé selon l'une quelconque des revendications 14 à 21, dans lequel le signal « envoyer les informations d'acheminement de message court » est reçu à partir d'un enregistreur de localisation nominal.

24. Procédé selon l'une quelconque des revendications 14 à 23, dans lequel une réponse est envoyée au signal « envoyer les informations d'acheminement de message court » au nom d'un enregistreur de localisation nominal du réseau de télécommunication mobile.

25. Procédé selon l'une quelconque des revendications 14 à 24, dans lequel les opérations sont mises en oeuvre conjointement à une fonction d'intelligence centralisée.

26. Procédé selon l'une quelconque des revendications 14 à 25, dans lequel un accusé de réception de distribution est renvoyé relativement au message texte SMS aboutissant à un terminal mobile reçu.

27. Programme informatique comportant des instructions exécutables sur un ordinateur, lequel, lorsqu'il est chargé sur un ordinateur, est exploitable pour amener l'ordinateur à mettre en oeuvre le procédé selon l'une quelconque des revendications 14 à 26.

28. Produit-programme informatique présentant un support lisible par ordinateur sur lequel sont enregistrés des signaux d'information représentatifs du programme informatique selon la revendication 27.
